# EUROPÄISCHE PATENTANMELDUNG

(11) **EP 1 849 579 A1**
(43) Veröffentlichungstag der Anmeldung: **31.10.2007**
(21) Anmeldenummer: 06008602.2
(22) Anmeldetag: 26.04.2006
(51) Int. Cl.: B29C 59/00, B65B 61/02, B23K 26/08

(54) **Verfahren zur Herstellung einer Folie für Aufreissverpackungen**

(71) Anmelder: Nordenia Deutschland Halle GmbH Werk Steinfeld, 49439 Steinfeld (DE)
(72) Erfinder: Kruse, Alfons, 49413 Dinkslage (DE); Brauer, Jochen, 49393 Lohne (DE); Stöppelmann, Detlef, 49439 Steinfeld (DE); Kujat, Marcus, 49090 Osnabrück (DE)
(74) Vertreter: Albrecht, Rainer Harald

(57) **Zusammenfassung**

Die Erfindung betrifft Verfahren zur Herstellung einer Folie für Aufreißverpackungen mit einer Schwächungslinie, wobei eine Folienbahn mit zumindest einer Folienschicht aus thermoplastischem Kunststoff einer Heißprägevorrichtung zugeführt wird, in der die Folienbahn mit einer linienförmigen Prägung versehen wird, wobei die Folienbahn einer Laserstrahlvorrichtung zugeführt wird, in der die Folienbahn mit einer linienförmigen Lasernaht versehen wird, und wobei die Prägung und die Lasernaht in Deckung sind und gemeinsam die Schwächungslinie bilden.

## Beschreibung

Die Erfindung betrifft ein Verfahren zur Herstellung einer Folie für Aufreißverpackungen mit einer Schwächungslinie. Aus einem gefalteten Abschnitt der Folie oder aus zwei von der Folie abgetrennten Folienblättern kann eine Aufreißverpackung gebildet werden, die beispielsweise durch Siegel- oder Klebenähte verschlossen wird. Die Schwächungslinie wird dabei typischerweise so angeordnet, dass sie im Wesentlichen parallel zu einer der Seiten der Aufreißverpackung verläuft. Die Schwächungslinie ermöglicht ein einfaches und kontrolliertes Aufreißen.

Eine aus einer Folie gebildete Aufreißverpackung mit einer Schwächungslinie ist aus der Druckschrift DE 41 09 605 A1 bekannt. Die schlauchförmige Aufreißverpackung ist aus einem Folienblatt gefaltet und durch eine in Längsrichtung verlaufende Siegelnaht und zwei endseitige Siegelnähte verschlossen. Die Folie ist mehrlagig laminiert, wobei die Schwächungslinie vor der Laminierung in eine der Folienlagen durch Einschnitte, thermische Versprödung oder eine Prägung erzeugt wird. Die Prägung vor einer Laminierung ist aufwendig und ermöglicht nur bei bestimmten Schichtzusammensetzungen das leichte Aufreißen der Aufreißverpackung.

Die Druckschrift WO 98/29312 beschreibt ein Verfahren zur Herstellung einer Aufreißverpackung mit einer Schwächungslinie, die ausschließlich durch einen Laserstrahl erzeugt wird. Bevor die Verpackung aus der Folie gebildet wird, wird von der Seite der mehrschichtigen Folie, die die Innenseite der Verpackung bildet, das Folienmaterial bis zu einer mittleren Schicht aus Leichtmetall abgetragen. Zum Materialabtrag allein durch den Laserstrahl ist dabei eine sehr hohe Laserleistung erforderlich, wobei zum Einhalten eines vorgegebenen Materialabtrags die Laserleistung genau an die Dicke und Zusammensetzung der zumindest einen abzutragenden Schicht angepasst werden muss.

Die Druckschrift EP 0 875 369 B1 beschreibt ein Verfahren zum Herstellen einer Verpackung, wobei die Verpackung zunächst aus zwei Folienblättern geformt wird. Anschließend werden durch einen Laserstrahl Reißeinschnitte an der Oberfläche des bereits geformten Beutels erzeugt. Da die Erzeugung der Schwächungslinie erst nach dem Formen des Beutels vorgesehen ist, ist das dargestellte Verfahren unflexibel.

Die Möglichkeit der Laserbearbeitung einer einzelnen Folienschicht ist in besonderer Weise von der Polymerzusammensetzung abhängig. Da in der Regel nur in einzelnen Schichten eine Schwächung durch einen Laserstrahl erzeugt werden soll, ist die Auswahl an geeigneten Schichtzusammenstellungen einer mehrschichtigen Folie äußerst begrenzt.

Vor diesem Hintergrund liegt der Erfindung die Aufgabe zugrunde ein Verfahren zur Herstellung einer Folie für Aufreißverpackungen mit einer Schwächungslinie anzugeben, welches die einfache Erzeugung der Schwächungslinie ermöglicht und f!exibel an verschieden ausgebildete Folien angepasst werden kann.

Gegenstand dieser Erfindung und Lösung dieser Aufgabe ist ein Verfahren zur Herstellung einer Folie für Aufreißverpackungen mit einer Schwächungslinie, wobei eine Folienbahn mit zumindest einer Folienschicht aus thermoplastischem Kunststoff einer Heißprägevorrichtung zugeführt wird, in der die Folienbahn mit einer linienförmigen Prägung versehen wird, wobei die Folienbahn einer Laserstrahlvorrichtung zugeführt wird, in der die Folienbahn mit einer linienförmigen Lasernaht versehen wird, und wobei die Prägung und die Lasernaht in Deckung sind und gemeinsam die Schwächungslinie bilden. Durch die Kombination einer Heißprägevorrichtung und einer Laserstrahlvorrichtung zur Erzeugung einer Schwächungslinie ist eine flexible Anpassung an die Zusammensetzung der Folie und bei einer mehrschichtigen Folie auch an den Schichtaufbau möglich. In der Heißprägevorrichtung wird die Folie unter der Einwirkung von Druck und Temperatur verformt. Inwieweit sich eine einzelne Folienlage in der Heißprägevorrichtung verformt, hängt im Wesentlichen von der Prägetemperatur und dem ausgeübten Druck ab, wobei diese beiden Parameter entsprechend der Erfordernisse frei variiert werden können. In der Laserstrahlvorrichtung erfolgt dagegen abhängig von dem Absorptionsvermögen des bestrahlten Polymers eine Erwärmung und typischerweise ein Materialabtrag durch verdampfen. Zu berücksichtigen ist dabei auch, dass die Intensität des Laserstrahls mit zunehmender Eindringtiefe abnimmt. Entsprechend der Erfordernisse können die Wellenlänge des Lasers und die Laserleistung gewählt werden.

In einer bevorzugten Ausführung des erfindungsgemäßen Verfahrens ist vorgesehen, dass die Folienbahn mit einer Vielzahl von in Laufrichtung der Folienbahn beabstandeten Schwächungslinien versehen wird, wobei die Schwächungslinien ohne Einschränkung quer zur Laufrichtung der Folienbahn, aber auch schräg, gebogen oder abgewinkelt verlaufen können. Zur Erzeugung der in Laufrichtung der Folienbahn beabstandeten Schwächungslinien kann dabei zweckmäßigerweise vorgesehen sein, dass der Vortrieb der Folienbahn nicht kontinuierlich sondern taktweise erfolgt, wobei die Folienbahn im Bereich der Heißprägevorrichtung und der Laserstrahlvorrichtung ruht, wenn die Schwächungslinien gebildet werden. Vorzugsweise wird die linienförmige Prägung mittels eines Prägebalkens erzeugt. Nachfolgend wird die Folienbahn weiter zur Laserstrahlvorrichtung transportiert, in der - ebenfalls bei ruhender Folienbahn - der Verlauf der linienförmigen Prägung mit einem Laserstrahl nachgefahren wird. Falls die linienförmige Prägung quer zur Laufrichtung verläuft, kann deren Verlauf durch eine einfache lineare Bewegung des Laserstrahls in Querrichtung nachgefahren werden. Sofern die linienförmige Prägung schräg, gebogen oder abgewinkelt verläuft, kann ein entsprechender Fahrweg des Laserstrahls beispielsweise durch eine an die Form des Prägebalkens angepasste Führung oder eine freiprogrammierbare Führung des Laserstrahls ermöglicht werden.

Die Folienbahn kann im Rahmen der Erfindung auch kontinuierlich an der Heißprägevorrichtung und der Laserstrahlvorrichtung vorbeigeführt, wobei die Schwächungslinie in Laufrichtung der Folienbahn erzeugt wird. Eine solche Ausgestaltung des erfindungsgemäßen Verfahrens ermöglicht eine äußerst einfache Herstellung der Folie, wobei in Querrichtung der Folie ohne Einschränkung eine einzige Schwächungslinie oder mehrere Schwächungslinien vorgesehen sein können. Nach der Erzeugung der Schwächungslinie kann unmittelbar eine Weiterverarbeitung der Folie vorgesehen sein, wobei zur Herstellung einzelner Aufreißverpackungen Folienblätter aus der Folienbahn abgetrennt werden. Alternativ kann die Folie als Vorprodukt jedoch auch zunächst aufgerollt und vor der weiteren Verarbeitung gelagert und transportiert werden. In der weiteren Ausgestaltung wird bei einer Erzeugung der Schwächungslinie in Laufrichtung der Folienbahn die linienförmige Prägung in der Heißprägevorrichtung mittels einer Prägerolle erzeugt. Die Prägerolle kann dabei einen um den Umfang durchgehenden Vorsprung zur Erzeugung einer durchgehenden linienförmigen Prägung oder auch einen um den Umfang unterbrochenen Vorsprung zur Erzeugung einer gleichmäßig unterbrochenen linienförmigen Prägung aufweisen. Auch die Lasernaht kann als durchgehende oder gleichmäßig unterbrochene Linie ausgeführt sein.

Die Folie ist vorzugsweise mehrschichtig coextrudiert oder laminiert, wobei zumindest eine der beiden Außenschichten heißsiegelbar ist. Die heißsiegelbare Schicht ermöglicht bei der Herstellung einer Aufreißverpackung einen Verschluss der Verpackung durch Siegelnähte. Als Polymer für die heißsiegelbare Außenschicht sind insbesondere Polyolefine wie beispielsweise Polyethylen, Polypropylen, Polyethylen-Copolymer, Polypropylen-Copolymer sowie Mischungen dieser Polymere geeignet. Im Rahmen der Erfindung kann die Folie vorzugsweise mehrschichtig laminiert sein und zumindest eine metallisierte Polymerschicht aufweisen. Durch eine dünne Metallschicht, beispielsweise aus aufgedampftem Aluminium, kann eine sehr gute Barrierewirkung der Folie in Bezug auf die Sauerstoffdurchlässigkeit und die Wasserdampfdurchlässigkeit erreicht werden, so dass eine aus der Folie gebildete Aufreißverpackung das verpackte Gut sicher schützt.

In einer besonders bevorzugten Ausführung der Erfindung ist vorgesehen, dass die Folie eine erste Außenschicht aus einem heißsiegelbaren Polyolefin und eine zweite Außenschicht aufweist, wobei die zweite Außenschicht bei der Erzeugung der Schwächungslinie zumindest abschnittsweise durchtrennt wird und wobei die Dicke der ersten Außenschicht bei der Erzeugung der Schwächungslinie maximal um 10 %, vorzugsweise maximal um 5 %, reduziert wird. Das erfindungsgemäße Verfahren kann so durchgeführt werden, dass gezielt einzelne Schichten im Bereich der Schwächungslinie zerstört werden, wobei die Dicke anderer, angrenzender Schichten weitgehend unverändert bleibt.

Neben einer Reduzierung der Schichtdicke können durch die Laserstrahlvorrichtung und die Heißprägevorrichtung eine Versprödung des Materials erzeugt werden, die zu einem verbesserten Aufreißverhalten führt. Im Rahmen der vorliegenden Erfindung kann die linienförmige Lasernaht ohne Einschränkung vor oder nach der linienförmigen Prägung erzeugt werden, wobei jedoch in einer bevorzugten Ausführung der Erfindung zunächst die linienförmige Prägung in der Heißprägevorrichtung erzeugt wird.

Das erfindungsgemäße Verfahren kann zur Herstellung von Folien für unterschiedliche Aufreißverpackungen eingesetzt werden. Mögliche Verpackungsgüter sind beispielsweise Lebensmittel, Tiernahrung, Hygieneprodukte, sterile Gegenstände und Reinigungsmittel. Besonders vorteilhaft ist wenn bei der Herstellung der Aufreißverpackung, dort wo die Schwächungslinie den Rand der Aufreißverpackung erreicht, eine Kerbe zur Rissinitiierung vorgesehen ist.

Die Erfindung wird im Folgenden anhand einer lediglich ein Ausführungsbeispiel darstellenden Zeichnung erläutert. Es zeigen schematisch:
- **Fig.1**: eine Vorrichtung zur Durchführung des erfindungsgemäßen Verfahrens,
- **Fig.2**: eine weitere Vorrichtung zur Durchführung des erfindungsgemäßen Verfahrens und
- **Fig.3**: eine Schnittdarstellung einer in dem erfindungsgemäßen Verfahren hergestellten Folie im Bereich der Schwächungslinie.

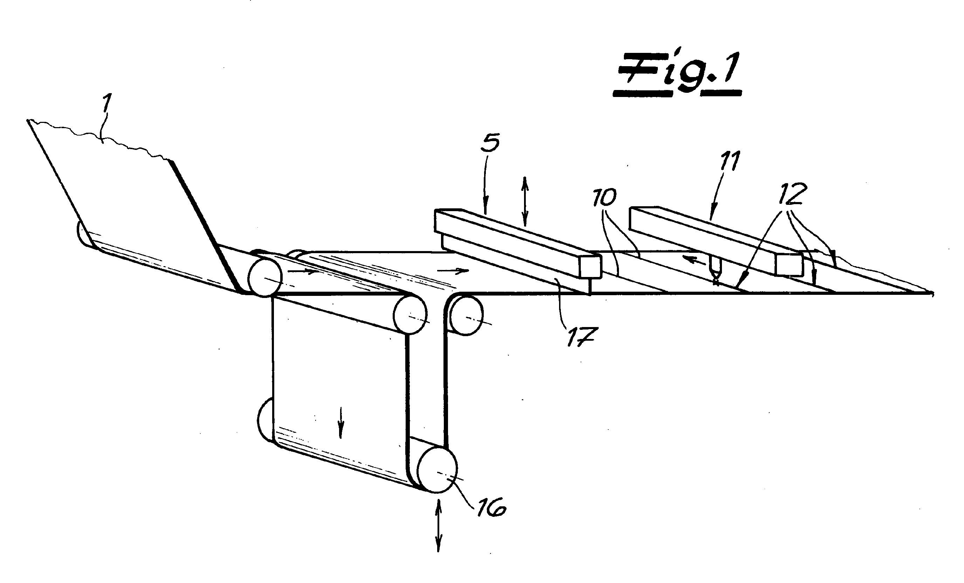

Fig. 1 zeigt anhand einer schematischen Darstellung die einzelnen Verfahrensschritte einer bevorzugten Ausführung des erfindungsgemäßen Verfahrens. Eine mehrschichtig laminierte Folienbahn 1 mit einer heißsiegelbaren ersten Außenschicht 2 aus einem Polyolefin an der Unterseite, einer zweiten Außenschicht 3 an der Oberseite und einer metallisierten Zwischenschicht 4 wird kontinuierlich einer Registeranordnung mit einer Registerwalze 16 zugeführt. Die Registerwalze 16 ist beispielsweise senkrecht zu der Laufrichtung der Folienbahn 1 verstellbar und wird so gesteuert, dass die Folienbahn 1 im Bereich einer Heißprägevorrichtung 5 und einer Laserstrahlvorrichtung 11 nicht kontinuierlich sondern taktweise transportiert wird. Die Folienbahn 1 wird von einem Prägebalken 17 mit einer quer zur Laufrichtung der Folienbahn 1 verlaufenden linienförmigen Prägung 10 versehen, während die Folienbahn im Bereich der Heißprägevorrichtung 5 ruht. Nachfolgend wird die Folienbahn 1 weiter zu der Laserstrahlvorrichtung 11 transportiert, in der - ebenfalls an der ruhenden Folienbahn 1 - der Verlauf der linienförmigen Prägung 10 durch eine lineare Bewegung eines Laserstrahls nachgefahren wird. Die so erzeugte Lasernaht und die Prägung 10 sind in Deckung und bilden gemeinsam eine Schwächungslinie 12. Aus der Folienbahn 1 können nachfolgend einzelne Aufreißverpackungen gebildet werden, die typischerweise jeweils eine der Schwächungslinien 12 aufweisen.

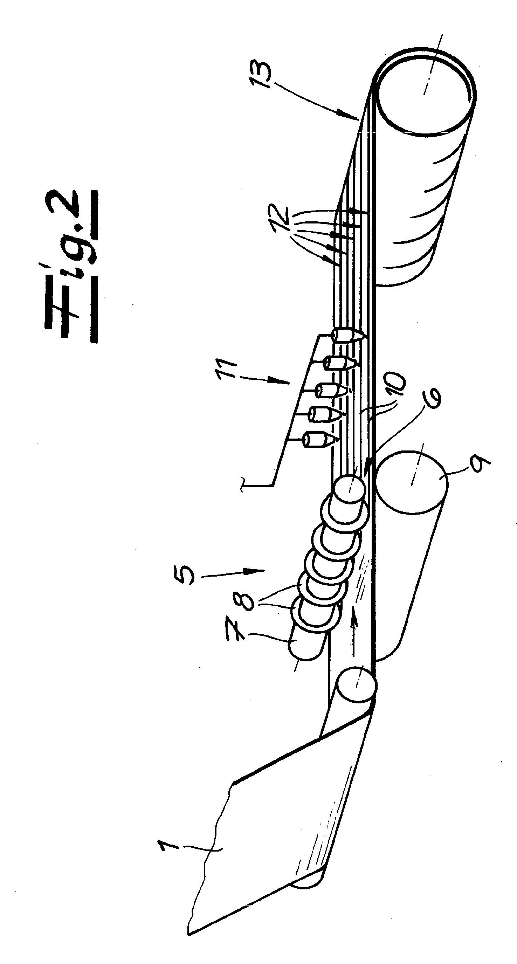

Fig. 2 zeigt anhand einer schematisch dargestellten Vorrichtung die einzelnen Verfahrensschritte einer weiteren Ausgestaltung des erfindungsgemäßen Verfahrens. Eine mehrschichtig laminierte Folienbahn 1 mit einer heißsiegelbaren ersten Außenschicht 2 aus einem Polyolefin an der Unterseite, einer zweiten Außenschicht 3 an der Oberseite und einer metallisierten Zwischenschicht 4 wird kontinuierlich einer Heißprägevorrichtung 5 zugeführt, in der die Folienbahn 1 in einem Walzenspalt 6 zwischen einer Prägerolle 7 mit einer Vielzahl von Vorsprüngen 8 und einer Gegenwalze 9 mit linienförmigen Prägungen 10 versehen wird. Nachfolgend wird die Folienbahn 1 einer Laserstrahlvorrichtung 11 zugeführt, in der in Deckung mit jeder Prägung 10 eine Lasernaht erzeugt wird. Jeweils eine linienförmige Prägung 10 und eine linienförmige Lasernaht bilden in Laufrichtung der Folienbahn 1 eine Schwächungslinie 12. Nach der Erzeugung der Schwächungslinie 12 wird die Folienbahn 1 vor der Weiterverarbeitung aufgerollt und gelagert. Erst nach Lagerung und Transport werden aus der Folienbahn 1 Folienbögen mit jeweils einer Schwächungslinie 12 für die Herstellung einzelner Aufreißverpackungen abgetrennt.

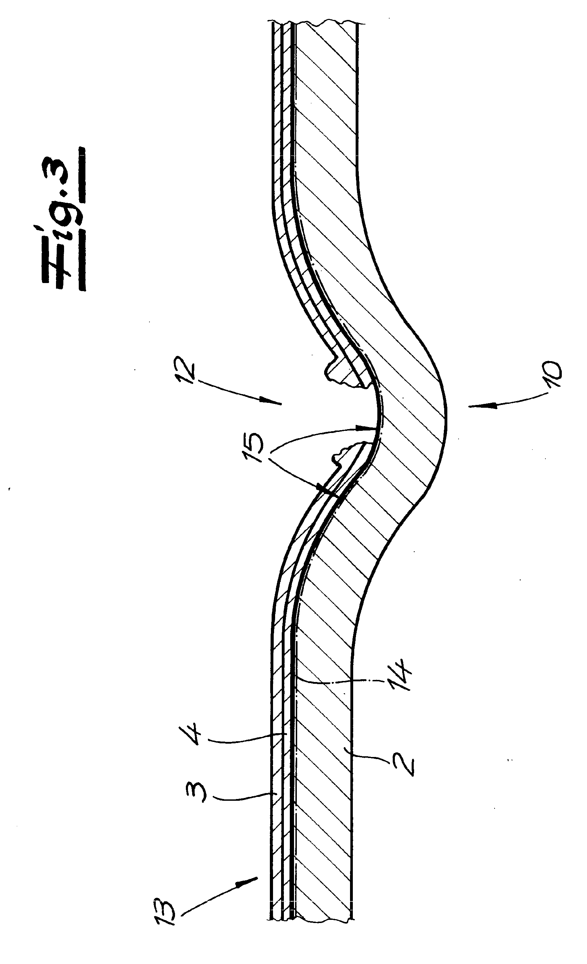

Fig. 3 zeigt eine nach dem erfindungsgemäßen Verfahren mit einer Schwächungslinie 12 versehene Folie 13. Eine heißsiegelbare erste Außenschicht 2 ist aus Polyethylen (PE) gebildet und weist eine Dicke von 90 µm auf. An die erste Außenschicht 2 grenzt über eine dünne Haftvermittlerschicht 14 eine Zwischenschicht 4 aus Polyethylenterephthalat (PET) an, die auf der der ersten Außenschicht 2 zugewandten Seite mit Aluminium bedampft ist. Die Gesamtdicke der Zwischenschicht 4 beträgt 12 µm, wobei die metallische Beschichtung 15 in einer Schichtdicke im Bereich von 50 - 100 Nanometer vorliegt. An die Zwischenschicht 4 grenzt eine zweite Außenschicht 3 mit einer Dicke von 12 µm aus Polyethylenterephthalat (PET) an. Im Querschnitt ist die Verformung der Folie 13 durch die linienförmige Prägung 10 in der Heißprägevorrichtung 5 zu erkennen. In der Mitte der Verformung sind die beiden Schichten (3, 4) aus Polyethylenterephthalat durch die Kombination von Heißprägung und der Bestrahlung durch einen Laser bis auf die metallische Beschichtung 15 durchtrennt.

Um den Einfluss der Schwächung auf die Sauerstoffdurchlässigkeit und die Wasserdampfdurchlässigkeit zu ermitteln, wurde in einem Bereich der Schwächungslinie 12 und in einem Bereich ohne Schwächung eine kreisförmige Probe mit einer Fläche von 50 cm² untersucht. Im Bereich der Schwächungslinie 12 teilte diese dabei den Kreis in gleiche Teile. Tabelle 1 ist zu entnehmen, dass die Wasserdampfdurchlässigkeit durch die Schwächung kaum beeinflusst wird. Zwar wird die Sauerstoffdurchlässigkeit erhöht, jedoch sind die erhöhten Werte für die vorgesehenen Anwendungen unerheblich. Da die Fläche der Schwächungslinie 12 gegenüber der Gesamtfläche eines Verpackungsbeutels typischerweise sehr gering ist, weist eine mit der dargestellten Folie 13 gefertigte Aufreißverpackung insgesamt sehr gute Barriereeigenschaften auf.

| | Ohne Schwächung | Im Bereich der Schwächungslinie |
|---|---|---|
| Sauerstoffdurchlässigkeit (bei 23° C / 50 % RH) | 0,8 cm³ / (m² * Tag) | 6,9 cm³ / (m² * Tag) |
| Wasserdampfdurchlässigkeit (bei 23° C / 85 % RH) | 0,22 cm³ / (m² * Tag) | 0,26 cm³ / (m² * Tag) |

## Patentansprüche

1. Verfahren zur Herstellung einer Folie (13) für Aufreißverpackungen mit einer Schwächungslinie (12),
wobei eine Folienbahn (1) mit zumindest einer Folienschicht aus thermoplastischem Kunststoff einer Heißprägevorrichtung (5) zugeführt wird, in der die Folienbahn (1) mit einer linienförmigen Prägung (10) versehen wird,
wobei die Folienbahn (1) einer Laserstrahlvorrichtung (11) zugeführt wird, in der die Folienbahn (1) mit einer linienförmigen Lasernaht versehen wird, und
wobei die Prägung (10) und die Lasernaht in Deckung sind und gemeinsam die Schwächungslinie (12) bilden.

2. Verfahren nach Anspruch 1, wobei die Folienbahn (1) mit einer Vielzahl von in Laufrichtung der Folienbahn (1) beabstandeten Schwächungslinien (12) versehen wird.

3. Verfahren nach Anspruch 2, wobei die linienförmige Prägung (10) in der Heißprägevorrichtung (5) mittels eines Prägebalkens (17) erzeugt wird und wobei nachfolgend in der Laserstrahlvorrichtung (11) zur Erzeugung der Schwächungslinie (12) der Verlauf der linienförmigen Prägung (10) mit einem Laserstrahl nachgefahren wird.

4. Verfahren nach Anspruch 1, wobei die Folienbahn (1) kontinuierlich an der Heißprägevorrichtung (5) und der Laserstrahlvorrichtung (11) vorbeigeführt wird und wobei die Schwächungslinie (12) in Laufrichtung der Folienbahn (1) erzeugt wird.

5. Verfahren nach Anspruch 4, wobei die linienförmige Prägung (10) in der Heißprägevorrichtung (5) mittels einer Prägerolle (7) erzeugt wird.

6. Verfahren nach einem der Ansprüche 1 bis 5, wobei die Folie (13) mehrschichtig coextrudiert oder laminiert ist, und wobei zumindest eine der beiden Außenschichten (2, 3) heißsiegelbar ist.

7. Verfahren nach Anspruch 6, wobei die Folie (13) mehrschichtig laminiert ist und eine zumindest metallisierte Polymerschicht aufweist.

8. Verfahren nach einem der Ansprüche 1 bis 7, wobei die Folie eine erste Außenschicht (2) aus einem heißsiegelbaren Polyolefin und eine zweite Außenschicht (3) aufweist, wobei die zweite Außenschicht (3) bei der Erzeugung der Schwächungslinie (12) zumindest abschnittsweise durchtrennt wird und wobei die Dicke der ersten Außenschicht (2) bei der Erzeugung der Schwächungslinie (12) maximal um 10 %, vorzugsweise maximal um 5 %, reduziert wird.

9. Verfahren nach einem der Ansprüche 1 bis 8, wobei nach der Erzeugung der Schwächungslinie (12) Folienblätter für die Herstellung einzelner Aufreißverpackungen von der Folienbahn (1) abgetrennt werden.

## Geänderte Patentansprüche

### Geänderte Patentansprüche gemäss Regel 86(2) EPÜ.

**1.** Verfahren zur Herstellung eines flächigen Verpackungsmaterials für Aufreißverpackungen mit einer Schwächungslinie (12),
wobei eine Materialbahn, die mindestens eine Schicht aus thermoplastischem Kunststoff aufweist, mit einer linienförmigen Prägung (10) versehen wird,
wobei die Materialbahn einer Laserstrahlvorrichtung (11) zugeführt wird, in der die Materialbahn mit einer linienförmigen Lasernaht versehen wird, und
wobei die Prägung (10) und die Lasernaht in Deckung sind und gemeinsam die Schwächungslinie (12) bilden,
**dadurch gekennzeichnet, dass** als Materialbahn eine Folienbahn (1) verwendet wird, die eine erste Außenschicht (2) aus einem heißsiegelbaren Polyolefin und eine zweite Außenschicht (3) aus Polyethylenterephthalat (PET) aufweist, dass die linienförmige Prägung (10) mittels einer Heißprägevorrichtung (5) erzeugt wird und dass die zweite Außenschicht (3) bei der Erzeugung der Schwächungslinie (12) durch Lasern zumindest abschnittsweise durchtrennt wird, wobei die Folie durch das Heißsiegeln und das Lasern versprödet und **dadurch** das Aufreißverhalten verbessert wird.

**2.** Verfahren nach Anspruch 1, **dadurch gekennzeichnet, dass** die Folienbahn (1) mit einer Vielzahl von in Laufrichtung der Folienbahn (1) beabstandeten Schwächtungslinien (12) versehen wird.

**3.** Verfahren nach Anspruch 2, **dadurch gekennzeichnet, dass** die linienförmige Prägung (10) in der Heißprägevorrichtung (5) mittels eines Prägebalkens (17) erzeugt wird und dass nachfolgend in der Laserstrahlvorrichtung (11) zur Erzeugung der Schwächungslinie (12) der Verlauf der linienförmigen Prägung (10) mit einem Laserstrahl nachgefahren wird.

**4.** Verfahren nach Anspruch 1, **dadurch gekennzeichnet, dass** die Folienbahn (1) kontinuierlich an der Heißprägevorrichtung (5) und der Laserstrahlvorrichtung (11) vorbeigeführt wird und dass die Schwächungslinie (12) in Laufrichtung der Folienbahn erzeugt wird.

**5.** Verfahren nach Anspruch 4, **dadurch gekennzeichnet, dass** die linienförmige Prägung (10) in der Heißprägevorrichtung (5) mittels einer Prägerolle (7) erzeugt wird.

**6.** Verfahren nach einem der Ansprüche 1 bis 5, **dadurch gekennzeichnet, dass** die Folie eine metallisierte Polymerschicht als Zwischenschicht aufweist.

**7.** Verfahren nach Anspruch 5, **dadurch gekennzeichnet, dass** die Dicke der ersten Außenschicht (2) bei der Erzeugung der Schwächungslinie (12) maximal um 10 %, vorzugsweise um maximal um 5 %, reduziert wird.

**8.** Verfahren nach einem der Ansprüche 1 bis 7, **dadurch gekennzeichnet, dass** nach der Erzeugung der Schwächungslinie (12) Folienblätter für die Herstellung einzelner Aufreißverpackungen von der Folienbahn (1) abgetrennt werden.
